# EUROPEAN PATENT APPLICATION

(11) **EP 4 180 187 A1**
(43) Date of publication of application: **17.05.2023**
(21) Application number: 21207594.9
(22) Date of filing: 10.11.2021
(51) Int. Cl.: B25J 9/16, G06T 7/00, G06V 10/00

(54) **A COMPUTER-IMPLEMENTED OPERATING METHOD FOR HANDLING WORK-PIECES BY AN INPAINTING MODEL RECONSTRUCTION OF OCCLUDED PARTS**

(71) Applicant: Siemens Aktiengesellschaft, 80333 München (DE)
(72) Inventor: Fiedler, Michael, 90765 Fürth (DE); Funk, Harald, 91077 Neunkirchen a. Br. (DE); Gross, Ralf, 90471 Nürnberg (DE); Köbler, Alexander, 91781 Weißenburg (DE); Liao, Yucheng, 91052 Erlangen (DE); Pfeifer, Tobias, 95448 Bayreuth (DE); Schmeißer, Robert, 90592 Schwarzenbruck (DE); Thon, Ingo, 85630 Grasbrunn (DE)
(74) Representative: Siemens Patent Attorneys

(57) **Abstract**

The proposed system assumes the following components:
- a perception system, e. g. a laser scanner or a camera and
- a processing function,
- a vision system which processes the data from the camera. This base system is advantageously extended as described. It takes the camera data and reconstructs occluded parts to reestablish the violated prior assumption needed for the downstream system.

The system needs to be trained to reconstruct incomplete information in the sequence images. The training can be based on historic knowledge or on simulated data. The application example shows inpainting of 3D Point Clouds of overlapping objects.

## Description

In an automation facility, workpieces are handled and processed, in order to form products from them.

Industrial robot systems are widely used in this automation facilities for different tasks. They are automated, programmable and capable of movement on three or more axes and therefore can assist in material handling. Typical applications of robots include welding, painting, assembly, disassembly, pick and place, packaging and labeling, palletizing, product inspection, and testing; all accomplished with high endurance, speed, and precision.

It is a common task for a robot to pick some object from a transportation means, e. g. a conveyor belt or an autonomous transportation vehicle, for transport and further processing. It is also possible that a workpiece is placed fixed and the processing stations are doing the movement.

In the further text, work-station does not only mean a robot but any kind of kinematic or handling system.

In our application, perception system (for example camera) data includes all kind of sensor scanning data, not only visual data. Within the field of 3D object scanning, laser scanning combines controlled steering of laser beams with a laser rangefinder. By taking a distance measurement at every direction the scanner rapidly captures the surface shape of objects. 3D object scanning allows enhancing the design process, speeds up and reduces data collection errors, saves time and money, and thus makes it an attractive alternative to the above mentioned traditional data collection techniques.

By utilizing this perception system data processed by Artificial Intelligence AI, Machine Learning or classical computer vision enables many novel applications on the shop floor. Examples include, grasping of known objects, flexible grasping of unknown objects, quality inspection, object counting and many more.

These functionalities often come in the form of black boxes, which consume perception system images from a standardized interface, either talking directly to the perception system (e. g. via GigE Vision, USB vision, Firewire) or via proprietary protocols like ZeroMQTT or MQTT, https://mqtt.org/.

The black box function is then producing a result, which is consumed by a downstream system, e. g., for picking an object from a conveyor belt.

These black box functions are always developed with a specific scenario in mind. If assumptions of this scenario are violated, the functionality cannot be used and needs to be redeveloped.

A typical example of such a violation is the situation when parts are transported on (e. g.) a conveyor belt for further processing, where these parts are partially positioned in such a way that they in turn obscure other parts.

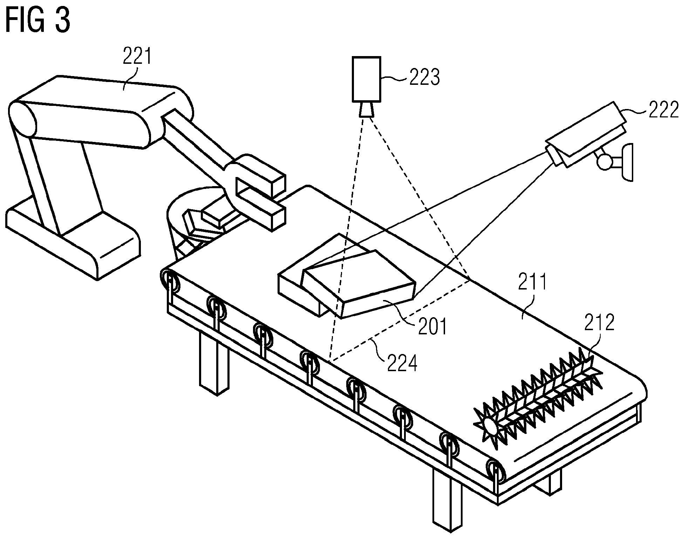

This situation is depicted in Figure 3, where a conveyor belt 211 is equipped with a separation device 212, for example a brush. Workpieces 201 are placed on this conveyor belt and transported towards the robot 221. In the shown case, two workpieces are situated on top of each other, so that a scanning devices 222, 223 cannot recognize only a fraction of the lower object and in worst case cannot differentiate both objects. A first perception system, e. g. a camera 222 or a second perception system, e. g. a laser scanner 223 with its linear scanning 224 will only recognize one part (that lies on top) and the robot 221 will therefore discard the workpieces.

Instead of a conveyor belt transporting the workpiece to a robot alternatively, it is also conceivable that the robot is somewhat mobile and moves toward the workpiece (including the perception system).

So far, it was necessary to re-establish the assumptions imposed from the original system. In case of the aforementioned picking example this requires attaching the perception system / camera 222 at the right spot to remove occlusions by the machinery. Furthermore, when occlusion of an object happens due to objects 201 lying on top of each other, the scenery needs to be scanned multiple times and occluding objects must be removed iteratively. Alternatively, sometimes mechanical means 212 can be used to solve the issue. Lastly, pieces that cannot be processed, might be disregarded.

However, all these steps imply extra costs and extra time.

The task of the invention is to provide a method and a system that can handle this kind of situation without the need of multiple scanning.

The problem will be solved by the method that is characterized in the features of the independent claim 1.

The computer-implemented operating method for operating a work-station in an industrial facility that is furnished and suitable for processing workpieces, wherein the workpieces in the facility are transported in direction to the work-station, or the work-station (221) is moved towards the workpieces (201, 202),
wherein the work-station is suitable and equipped to pick up the workpieces and during transport the workpiece are scanned by a perception system to produce scanning data from the workpieces, wherein
the evaluation of the scanning data shows that a second workpiece is positioned in such a way that it is occluded from being completely scanned by the scanning equipment.

In a next step the occluded part of the second workpiece in the scanning data is reconstructed by using an inpainting process on the received scanning data, based on a trained model using training data and the work-station then removes workpieces by first picking the first recognized workpiece, and then picks the second workpiece for further processing in the industrial facility.

The problem will further be solved by a computer-implemented training method characterized by the features of claim 9, a data processing system, characterized by the features of claim 10 and a computer program product characterized by the features of claim 11.

The main point of the claimed solution is to provide a possibility of detecting the scanned workpieces even when they are at least partially occluded.

This is done by reconstructing the occluded part of the second workpiece in the scanning data by using an inpainting process on the received scanning data, based on a trained model using training data.

Inpainting as such is known as a process where damaged, deteriorating, or missing parts of an artwork are filled in to present a complete image. There are programs in use that are able to reconstruct missing or damaged areas of digital photographs and videos. Inpainting has become an automatic process that can be performed on digital images. More than mere scratch removal, the inpainting techniques can also be applied to object removal, text removal, and other automatic modifications of images and videos.
In the following, we describe also a system, which reestablishes the respective assumptions in a special case by means of artificial intelligence functions. An example of such a prior assumption is given by the need for the absence of occlusion in the context of automated picking. Occlusions of objects to be picked might be given due to the machinery or due to other objects.

The claimed subject matter is illustrated in more detail in the figures, which show as follows
- Figure 1: an example of a data cloud after scanning process,
- Figure 2: an example of reconstruction of the lower part by using an autoencoder,
- Figure 3: an example of an industrial facility with a work-station,
- Figure 4: a possible solution concept and
- Figure 5: a data processing concept for the solution.

Figure 3 shows an exemplary situation, where the described method will be deployed. The details of the Figure 3 are already described in the introduction of the text, as one main advantage of the invention is the possibility to introduce this on already existing systems without great effort.

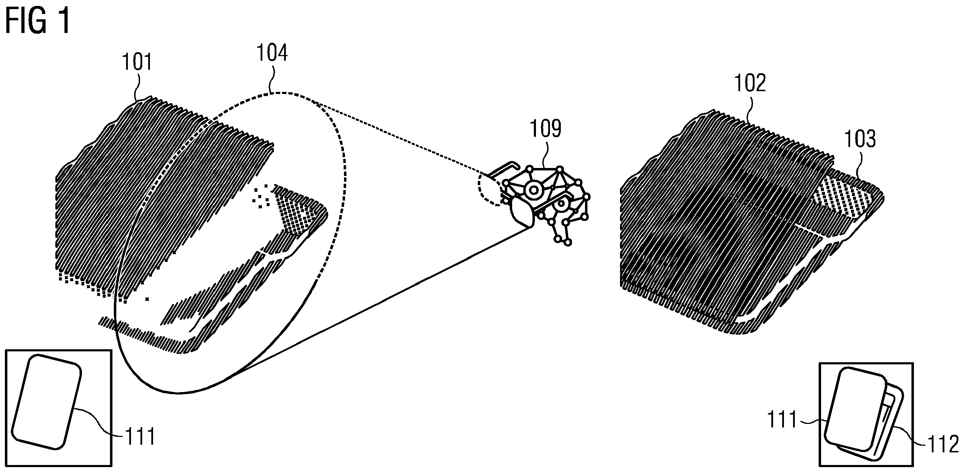

Figure 1 shows the main problem of the existing systems on the left side. While scanning multiple objects 101 placed on top of each other to be processed, at the moment it is not possible to catch a view on the bottom object. During the process of scanning the objects 104, for example with a laser scanner, 109 to create a 3D point cloud, only the object on the top will be recognized, 111 for further processing. The object below will not be recognized. This will slow down the production process, as the perception system got an image 111 that gives the impression of the bottom object missing and in worst case discards the objects or stops the system.

It is the task of this invention to offer a solution for the described problem by offering a possibility to detect the situation correctly and shows not only the object on the top 111 but also the object below, 112.

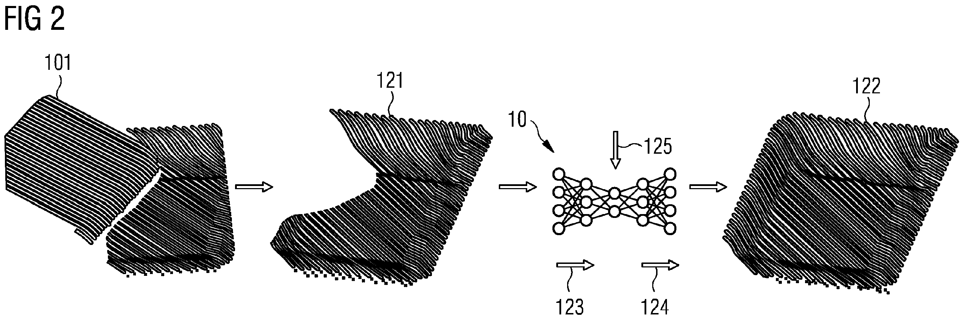

Figure 2 shows the result of the scanning process done by the scanning equipment, as a camera 222 or a laser scanner 223. The scanning process in the exemplary case is a line by line scanning and the result is in this case a 3D point cloud, as depicted in the left picture.

Before the further processing, and depending on the scanning method used, a noise reduction may be applied on the scanning result. The term noise reduction denotes the process of removing noise from a signal. Noise reduction techniques exist not only for audio but also for image data. Noise reduction algorithms may distort the signal to some degree.

All signal processing devices, both analog and digital, have traits that make them susceptible to noise, meaning disturbances in the reception.

Noise reduction processes can be supplemented even to the extent that additional correctly recognized things are filtered out as "noise", which are recognized but not relevant for further processing.

In a first step of the processing it is necessary to differentiate between the two workpieces, and then to deduct the information that belongs to the workpiece lying on top. In the second picture is shown what then is left of the scanning result, 121 and which is assumed to belong to the lower workpiece. In the next step, for example by using autoencoder technology, (with Encoding step 123 and Decoding step 124) 10, there will be an output generated 122, where the missing parts are added in this step, and as a result shows the lower work piece in total, 122 for further processing.

An autoencoder is a type of artificial neural network used to learn efficient coding of data. The encoding is validated and refined by attempting to regenerate the input from the encoding. Generally an autoencoder learns a representation (encoding) for a set of data, typically for dimensionality reduction, by training the network to ignore insignificant data ("noise").
In the following, the autoencoder is used in two different ways:
In the case of inpainting, the encoding is validated and refined by attempting to regenerate the missing information in the input and comparing it to its ground truth counterpart. The trained model can further be used to regenerate the missing information in previously unseen inputs.

Furthermore autoencoders can be used for the segmentation of different objects in an input.

Here, during the training, the input data and corresponding categories are required. The objective is given by recreating the input with assigned class affiliations of single points. This approach turns out to be advantageous in the view of ressource saving.

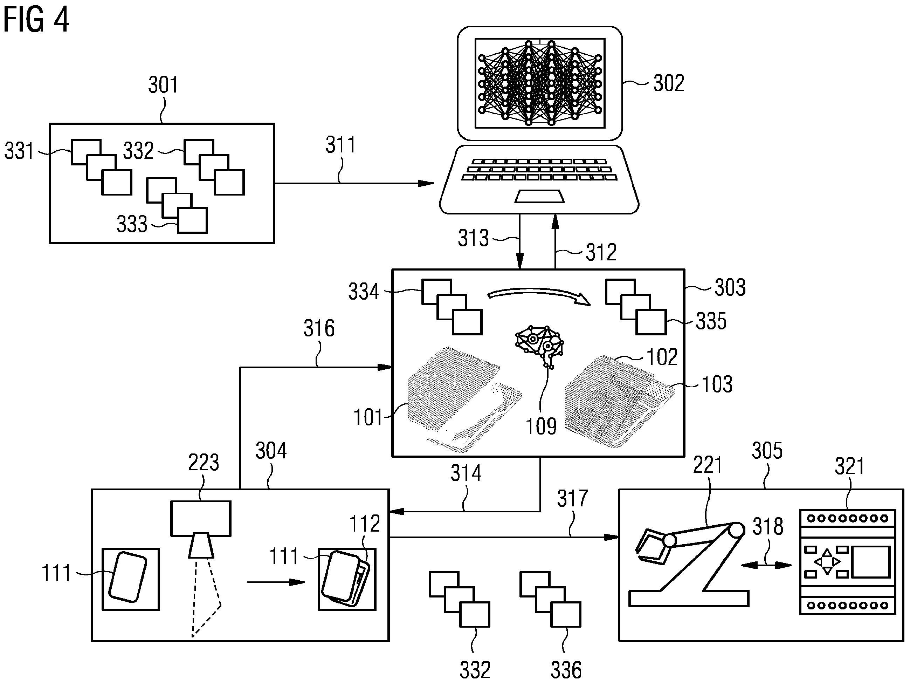

Figure 4 shows a solution concept of the claimed method and system depicted on a total system, including the already known parts also.

In the middle 303 there is shown the same symbolic picture as in Figure 1. From the Workpieces 201 there are scanned 3D point clouds 101. They are transformed by the proposed method 109 to the reconstructed data 335, that contains information about the top and the reconstructed bottom part. This is symbolized by the reconstructed 3D point cloud with both parts 102, 103.

In the beginning, there is the classic vision system 223 depicted in box 304. It scans the workpieces and if there is no problem and the workpieces are situated as expected on the transportation medium no more action is required. And the information is passed to the processing system 305 with PLC (programmable logic controller) 321 that controls, 318 a robot 221 (or any other gripping device). The Information 317 that is transferred from the Vision System 304 to the Execution System 305 contains separate information about lower object(s) 332 and upper object(s) 336.

In the case that the vision system 304 detects a situation with the lower object partly occluded by the upper object, the information about this will be directed to the new system, 316, which then evaluates the information as described above.

There is one initial dataset creation 301 to train a model 302 initially and lateron also continuously during execution of the system and method. The dataset starts with 3D point cloud information for the lower objects, 332, both objects, 331 and labels 333 for the model that was trained on machine learning methods.
The training can also be refined by further data that was collected from the real system, 312, 313 later on.

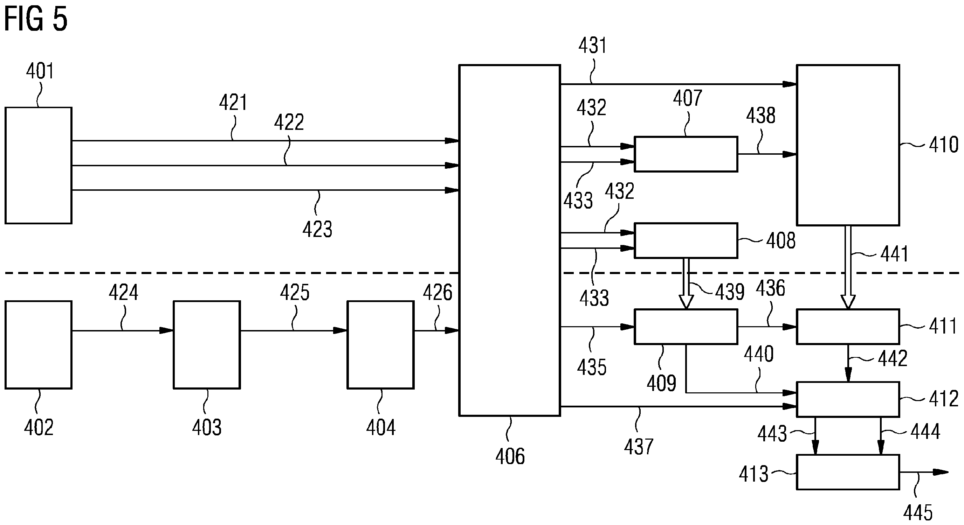

Figure 5 describes the data processing concept of the proposed solution in more detail.
Top left we start with synthetic training data, 401, which includes information about ground truth hidden object point clouds 421, Point Clouds with Both Objects, 422 and Categories Point clouds, 423. The synthetically generated point cloud of the complete lower object consists of the occluded and the non-occluded part (122). The synthetically generated point clouds of both objects consist of the complete upper object and the non-occluded part of the lower object (see 101) .

Below is a second path for producing data, using real data, 402, which is created during the execution of the real system. Those information about repoint clouds with Both Object are then revised, 424 by cropping the background, 403 (e. g. with a fixed y and z cropping boundary) and then, 425 by removing additional noise by application of an outlier removal algorithm 404.
Those are then computed via Interpolation, 406, regarding Grid = Grid
Depth Map Dimension 405
Fixed maximal eucledian distance and linear interpolation The point clouds are mapped, 406, to an equidistant grid 437 by mapping the points to their nearest neighbor in the grid within a predefined maximal Euclidian distance and subsequent interpolation.
Afterwards the point clouds are denoted as depth maps.
The categories 422 are also mapped to the equidistant grid yielding 433.

In other words: the upper path, starting with synthetic data 401 describes the training process of the system, e. g., the training based on this synthetic data. The training data, 401, on the top left consists of the point cloud of the complete lower object consisting of the occluded and the non-occluded part 421 (see in figure 2), the point clouds of both objects consist of the complete upper object and the non-occluded part of the lower object 422 (see 101), and the categories with respect to the point clouds with both objects, 422. The categories differentiate between points corresponding to the upper object and points corresponding to the non-occluded part of the lower object.

The lower path, starting with real data, 402 shows the data processing of real data of the in production deployed system. This data consists of the point cloud recorded by the real system with the upper object and the non-occluded part of the lower object 424. This point clouds are then revised, 424 by cropping the background, 403 (e. g. with a fixed y and z cropping boundary) and then, 425 removing additional noise by application of an outlier removal algorithm, 404.

The point clouds are interpolated to an equidistant grid, 406, and afterwards denoted as depth maps. The categories 422 are also mapped to the equidistant grid yielding 433.

In the depth map 432 generated from the point cloud 422 including both objects, the upper object is masked by a constant, 407, using the categories 433 yielding the masked depth map 438.

A convolutional autoencoder, 410, can be trained for inpainting using the depth map generated of 421 of the complete lower object, 431, and the masked depth map 438.
A second autoencoder is trained with the depth map of both objects 432 and the categories 433 to segment the upper and the non-occluded part of lower object in the depth map 432.

The trained inpainting autoencoder 411 is deployed 441 in the real system.

The trained segmentation autoencoder 409 is deployed 439 in the real system.

In the deployed real system, the filtered point clouds 426 are mapped to the equidistant grid 437 yielding the depth map including the upper and the non-occluded lower object 435.

The depth map 435 is segmented using the trained segmentation autoencoder 409 yielding the depth map, 436) with masked upper object and the depth map 440 only consisting of the upper object.

The masked depth map, 436 is inpainted using the trained inpainting autoencoder 411 yielding the depth map 442 with the complete reconstructed lower object.

The depth maps, 442 and 440 are reconstructed to 3D point clouds, 443 and 444, respectively, utilizing the equidistant grid, 437.
The reconstructed point cloud of the lower object, 443 and the point cloud of the upper object, 444 are recombined, 413 to a single point cloud without missing values because of occlusion, 445.

The combined point cloud 445 can be transferred as a .tif-file and be further processed in the facility, e. g., by the base vision system.

In summary, our system assumes the following components:
- a perception system, e. g. a laser scanner or a camera and
- a processing function,
- a vision system which processes the data from the camera. This base system is advantageously extended as described. It takes the camera data and reconstructs occluded parts to reestablish the violated prior assumption needed for the downstream system.
Our system needs to be trained to reconstruct incomplete information in the sequence images. The training can be based on historic knowledge or on simulated data. The application example shows inpainting of 3D Point Clouds of overlapping objects.

Generating data in simulation by the following steps:
1) Rebuilt the real setup in a virtual environment, including a point cloud camera, for example.
2a) Simulate situations with overlapping objects (meaning variation in relative angles and share of overlap between the objects) in relevant position of the Field of View (FOV) of the point cloud camera
2b) Include data transformation functions to get the same format of point clouds measured by real and by a simulated camera (if necessary).
3) Data is acquired for different situations in the virtual environment, thereby building a database of samples, each sample including
   (a) 'measured 3D point cloud by simulated camera',
   (b) 'ground truth point cloud of the lower object including parts of the object that were hidden from the camera angle by the object overlap',
   (c) 'assignments between points and objects in point cloud (a) '
   Alternatively, historical data can be recorded in the real process
4) Train a Machine Learning model for inpainting (MLM1) based on (a) and (b). Thereby get a Machine Learning model to generate (b) out of (a).
5) Train a Machine Learning model for object segmentation (MLM2) based on (a) and (c)
6) Deploy MLM1 & MLM2 on the real system.
7) Perform inpainting & segmentation on point cloud as measured by a real camera.
Utilization of simulated or historical data to reconstruct missing information, instead of the costly adaptation of the data recording process to reduce the preceding information loss.

In summary, the claimed solution achieves the advantages described in the following.
Already existing processes and systems can be reused unchanged, there is no in-depth change required, the new steps can be easily integrated into any existing system.
By using the proposed solution, the process speed can be increased significantly, because no removal of physical measurement restrictions is necessary. This means, that the amount of unrecognized objects is significantly lower due to the processing of the scanned data by means of the claimed method and the process passes in a larger number of cases with a positive result in the recognition. No stopping of the process is necessary.

Last but not least, an increased process reliability will be reached, because cases with missing information due to the measurement can be processed.

## Claims

1. A computer-implemented operating method for operating a work-station (221) in an industrial facility (20) for processing workpieces (201, 202), wherein
the workpieces (201, 202) in the facility are transported (211) in direction to the work-station (221),
or the work-station (221) is moved towards the workpieces (201, 202), wherein the work-station (221) is suitable and equipped to pick up the workpieces (201, 202), and
during transport the workpiece are scanned (224) by a perception system (222, 223) to produce scanning data from the workpieces, wherein
an evaluation of the scanning data shows that a second workpiece is positioned in such a way that it is occluded from being completely scanned by the scanning equipment (222, 223),
**characterized in that**
in a next step the occluded part of the second workpiece in the scanning data is reconstructed by using an inpainting process on the received scanning data, based on a trained model (302) using training data (301) and
the work-station (221) then removes workpieces by first picking the first workpiece (221), and then picks the second workpiece (222) for further processing in the industrial facility.

2. The method according to the features of the patent claim 1
**characterized in that**
another object, in particular a first workpiece (201), is positioned with respect to the second workpiece in such a way that it occludes the second workpiece from being completely scanned by the scanning equipment (222, 223).

3. The method according to the features of the patent claims 1 or 2
**characterized in that**
the trained model uses historical data for training purposes, that was recorded in during the real processing of the workpieces in advance.

4. The method according to the features of the patent claim 1 or 2
**characterized in that**
the trained model uses a simulated data sample set that was created by rebuilding a real setup in a virtual environment and simulating scanning data wherein a first workpiece (201) is positioned with respect to a second workpiece in such a way that it occludes the second workpiece from being completely scanned, by varying the angle of the both workpieces and the share of occlusion of the second workpiece.

5. The method according to the features of the patent claim 4
**characterized in that**
the scanning information consists of a 3D point cloud by a laser scanner and
each training data sample contains the following information:
a) a measured 3D point cloud by simulated camera,
b) a point cloud of the lower object including parts of the object that were hidden from the camera angle by the object overlap, and
c) assignments between points and objects in 3D point cloud of step a).

6. The method according to the features of one of the preceding patent claims
**characterized in that**
the inpainting process of occluded part of the second workpiece is used for prediction of perception of second workpiece (222) after picking first workpiece (221).

7. The method according to the features of one of the preceding patent claims
**characterized in that**
for the an image inpainting process on the received scanning data an artificial neural network autoencoder (125) is used.

8. A computer-implemented method for generating a simulated point cloud data sample set for using in a trained model (302) according to one of the preceding claims,
by rebuilding a real setup in a virtual environment and simulating scanning data wherein a first workpiece (201) is positioned with respect to a second workpiece in such a way that it occludes the second workpiece from being completely scanned, by varying the angle of the both workpieces and the share of occlusion of the second workpiece.

9. A computer-implemented training method for generating a simulated point cloud data sample set for using in a trained model (302) according to claim 8, wherein
a data transformation function is included to generate a same format of point clouds measured by perception system (222, 223) and by simulated camera.

10. A data processing system comprising means for carrying out the steps of the method of any one of the preceding method claims.

11. A computer program product comprising instructions which, when the program is executed by a computer, cause the computer to carry out the steps of the method of any one of the preceding method claims.

12. A trained machine-learning model trained in accordance with the method of claim 1.
